# EUROPEAN PATENT APPLICATION

(11) **EP 1 411 493 A2**
(43) Date of publication of application: **21.04.2004**
(21) Application number: 03290172.0
(22) Date of filing: 23.01.2003
(51) Int. Cl.: G10H 3/14, A63H 13/00, G06F 3/00

(54) **Striking reaction system**

(30) Priority: 14.10.2002 CN 21405830
(71) Applicant: Liu, Yu-Chen, Keelung, Taiwan 201 (TW); Liu, Tzu-Chen, Keelung, Taiwan 201 (TW)
(72) Inventor: Liu, Yu-Chen, Keelung, Taiwan 201 (TW); Liu, Tzu-Chen, Keelung, Taiwan 201 (TW)
(74) Representative: Bloch, Gérard

(57) **Abstract**

A striking reaction system mainly includes a striking sensor unit, a signal converting unit connected to a computer main unit system and a reaction unit controlled by the computer main unit system; wherein the striking sensor unit further has a buzzing tab capable of transmitting a striking force to the signal converting unit via an analog signal of a vibration wave frequency; the signal converting unit converts the analog signal of the vibration wave frequency to a digital signal and transmits it to the computer main unit system for operation and analysis such that the reaction unit makes appropriate sound, image or displacement reactions thereby informing a user the striking force or the interval time sequence.

## Description

### BACKGROUND OF THE INVENTION

### 1) FIELD OF THE INVENTION

The present invention relating to a striking reaction system with the technique thereof extended from the operation of a computer peripheral equipment; the present invention comprises a striking sensor unit, a signal converting unit connected to the computer main unit system and a reaction unit controlled by the computer main unit system; the application scope of the present invention is extensive and suitable for professional industries, music practice and compiling or regular consuming electronic products.

### 2) DESCRIPTION OF THE PRIOR ART

Accordingly, an electronic drum is of a type of system reacting to the signals generated by striking; its working principle is that when the resonator is struck, it uses a buzzing tab or a reed disposed inside a resonator (a drum body) to generate vibration wave and transmit the vibration wave to a processor for sending out a drumming sound through an amplifier; therefore, it substitutes a traditional drum using the sound wave of the resonator to resonate and send out the sound.

Comparing with the traditional drum, the advantage of the electronic drum is that when the processor makes the amplifier to send out the drumming sound, a user uses the processor to control the volume or uses the same electronic drum to make different drumming sounds. In other words, the function of a set of electronic drums depends on the predetermined program in the processor; without a comprehensive predetermined program, the function of the electronic drum is limited.

Unfortunately, the function of the processor of an available electronic drum is stilled restricted by the technique of electronic sound frequency thereby failing to effectively extend the application principle to the extreme level. Once integrated with the powerful functions of the computer technique advancing continuously, the system reacting to the signals generated by striking can be applied to even more aspects. That is the original idea of the present invention.

For example, when the computer main unit system receives the striking signals, it uses a displayer to show the force of a vibration wave, drives a speaker to sent out the sound via a sound effect card or uses a output interface to drive a mechanic device to generate actions. Comparing with the processor of the electronic drum, the effectiveness of the present invention has been augmented tremendously.

### SUMMARY OF THE INVENTION

Specifically, the present invention provides a striking reaction system and mainly comprises a striking sensor unit, a signal converting unit connected to a computer main unit system and a reaction unit controlled by the computer main unit system; wherein the striking sensor unit further has a buzzing tab capable of transmitting a striking force to the signal converting unit via a vibration wave frequency; the signal converting unit converts the analog signal of the vibration wave frequency to a digital signal and transmits it to the computer main unit system for operation and analysis such that the reaction unit makes appropriate sound, image or displacement reactions thereby informing a user the striking force or the interval time sequence. The application scope of the present invention is extensive and suitable for professional industries, music practice and compiling or regular consuming electronic products.

The main objective of the present invention is to utilize the reaction unit as an amplifier, a displayer or a mechanic device. When the signal converting unit converts the analog signal of the vibration wave frequency to a digital signal to be transmitted to the computer main unit system for operation and analysis, the reaction unit makes appropriate sound, image or displacement reactions thereby informing a user the striking force or the interval time sequence.

For example, when using the reaction unit as a displayer, the computer main unit system displays the analysis result or operation in the form of image on the displayer; different striking forces generate different images. Therefore, the user recognizes the strength of the striking force by the displayed image; or, the computer main unit system displays the striking time point on the displayer according to the time sequence; therefore, the use recognizes if the time point of the striking is correct. This exemplary embodiment is especially suitable for music practice or industrial striking test.

For another example, when using the reaction unit as a mechanic joint (said mechanic device) at a toy dog's leg portion, the striking sensor unit is disposed at the head portion of the toy dog. When the user pats the head portion of the toy dog, the sequence of the patting movements makes the toy dog lie down or stand up via the functions of the striking sensor unit, the signal converting unit, the computer main unit system and the reaction unit. Of course, an amplifier can be added to the reaction unit at the toy dog's mouth portion such that the toy dog not only moves but also barks. This exemplary embodiment is for a regular consuming electronic product.

To enable a further understanding of the structural features and the technical contents of the present invention, the brief description of the drawings below is followed by the detailed description of the preferred embodiment.

### BRIEF DESCRIPTION OF THE DRAWINGS

Figure 1 is a schematic drawing of the disposition of the system of the present invention.
Figure 2 is a pictorial and schematic drawing of the first exemplary embodiment of the present invention.
Figure 3 is a pictorial and schematic drawing of the second exemplary embodiment of the present invention.
Figure 4 is a pictorial and schematic drawing of the third exemplary embodiment of the present invention.

### DETAILED DESCRIPTION OF THE PREFERRED EMBODIMENTS

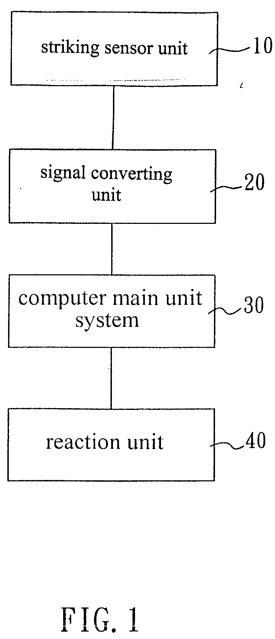

As indicated in FIG. 1, the present invention of a striking reaction system mainly comprises a striking sensor unit (10), a signal converting unit (20) connected to a computer main unit system (30) and a reaction unit (40) controlled by the computer main unit system (30); wherein the striking sensor unit (10) transmits a striking signal to the signal converting unit (20) for converting the analog signal of the vibration wave frequency to a digital signal and transmit it to the computer main unit system (30) for operation and analysis such that the reaction unit (40) makes appropriate sound, image or displacement reactions thereby informing a user of the striking force or the interval time sequence.

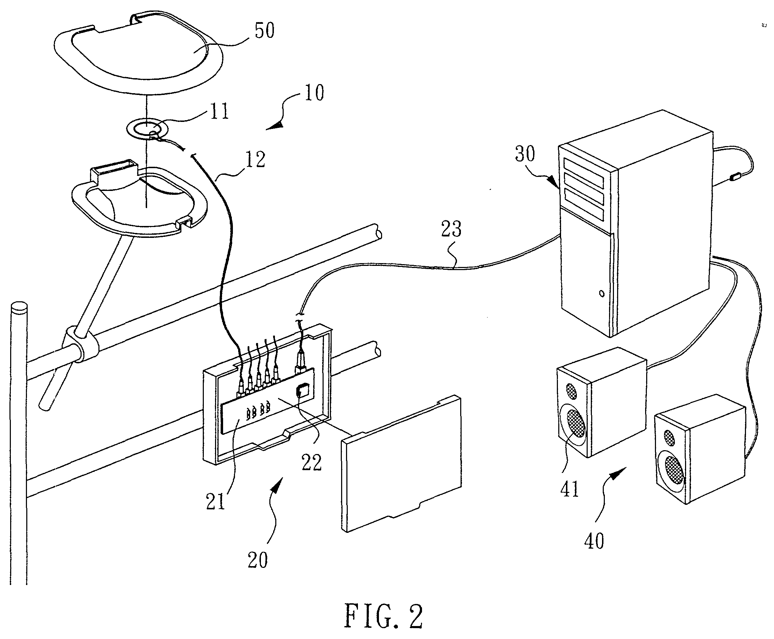

FIG. 2 shows the pictorial and schematic drawing of the first exemplary embodiment of the present invention. The striking sensor unit (10) is disposed inside an electronic drum (50) and comprises a buzzing tab (11) or a reed and a set of signal wires (12). When the user strikes the electronic drum (50), the buzzing tab (11) vibrates and generates different amplitudes. One end of the signal wire (12) connects with the buzzing tab (11) and the other end thereof connects with the signal converting unit (20); therefore, the signal wire (12) transmits the vibration of the buzzing tab (11) to the signal converting unit (20) in the form of the analog signal.

The signal converting unit (20) comprises a circuit base board (21) disposed with a plurality of electronic elements and chips (22); in addition, it has a transmission interface (23) connected with the computer main unit system (30) for transmitting signals. When the striking sensor unit (10) transmits the analog signal generated by striking to the signal converting unit (20), the signal converting unit (20) converts the analog signal via the electronic elements and chips (22) to a digital signal readable and recognizable by the computer main unit system (30); it also utilizes the transmission interface (23) to transmit the signal to the computer main unit system (30). In implementation, the signal converting unit (20) is built-in or externally connected to the computer main unit system (30). As indicated in FIG. 2, the signal converting unit (20) connects externally to the computer main unit system (30). The dimension of the transmission interface (23) is preferred to be the dimensions of compatible USB or IEEE1394 interfaces adapted extensively.

A software is disposed inside the computer main unit system (30) to record and analyze the input signal of the signal converting unit (20). The software transmits an executive signal. When in implementation, the computer main unit system (30) is of a system, such as a desktop computer, a notebook computer, a personal digital assistant (PDA), having a central process unit, an input and output transmission interface port as well as a memory.

The reaction unit (40) connects with the computer main unit system (30). When the software inside the computer main unit system (30) outputs the executive signal, the reaction unit (40) makes a relative action according to the executive signal. In this implementation, the reaction unit (40) connects with an amplifier (41) of the computer main unit system (30). In other words, when the user strikes the electronic drum (50), the buzzing tab (11) of the striking sensor unit (10) vibrates. The signal wire (12) transmits the analog signal to the signal converting unit (20) for converting it into the digital signal. The transmission interface (23) transmits the signal to the computer main unit system (30). At this time, after operating and analyzing the received signal, the software inside the computer main unit system (30) outputs the executive signal to make the amplifier (41) of the reaction unit (40) send out sounds; therefore, the user recognizes the force of the striking and the accuracy of the time sequence (the rhythm) via the sound sent by the amplifier (41). In this implementation, the present invention is applied to a music practice field.

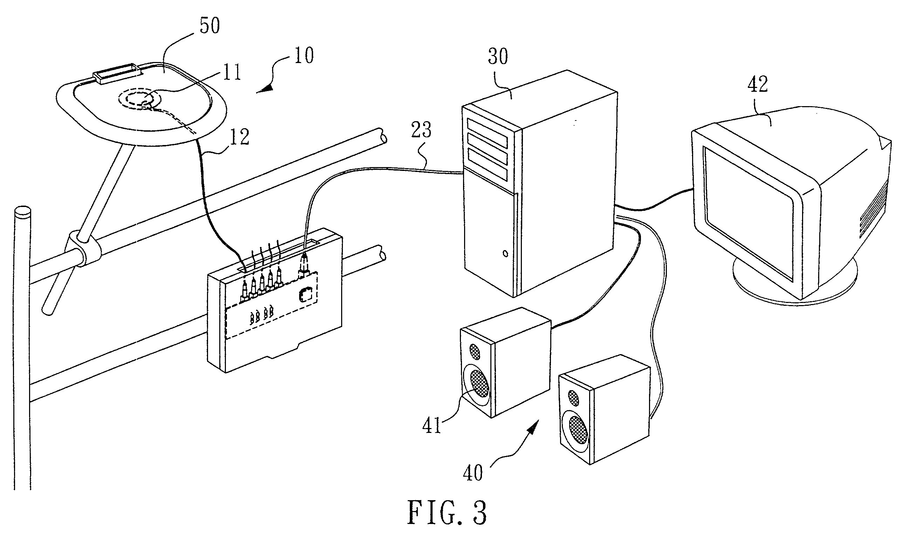

FIG. 3 indicates the schematic drawing of the second exemplary embodiment of the present invention. Wherein, in addition to the amplifier (41), the reaction unit (40) uses images to display the signal on a displayer (42) of a computer main unit system (30) thereby allowing the user to recognize the force of the striking and the accuracy of the time sequence. This implementation especially suits the industrial usage. For example, when an industrial product has to make a serial or interval striking movements and the striking force has to be limited, the striking sensor unit (10) is disposed onto the industrial product. When the industrial product starts to strike, the striking sensor unit (10), the signal converting unit (20), the computer main unit system (30) and the reaction unit (40) function sequentially to allow the user to recognize the force of the striking and the accuracy of the time sequence through the image displayed on the displayer (42).

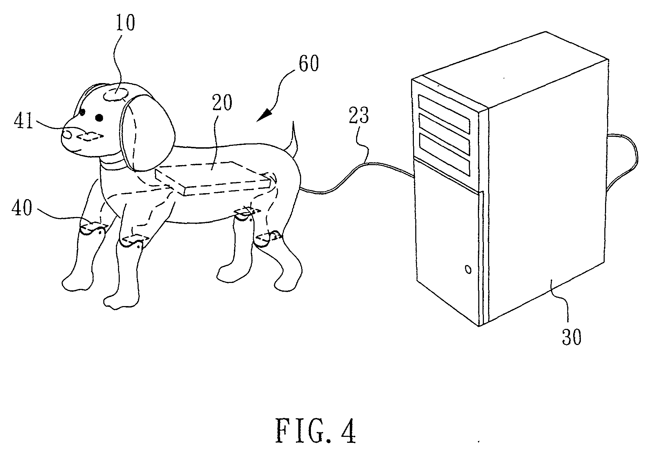

FIG. 4 shows the schematic drawing of the third exemplary embodiment. In addition to apply the present invention to the professional fields of industries as well as music practice and compiling, it can be applied to the regular consuming products. For example, as indicated in FIG. 4, the toy (60) simulates an animal's shape. In implementation, the striking sensor unit (10) is disposed at the head portion of the toy (60); the signal converting unit (20) is disposed in the body thereof; the reaction unit (40) works as the mechanic joint at the leg portion or the tail portion thereof; or the amplifier is disposed at the mouth portion thereof. Of course, the signal converting unit (20) still needs the transmission interface (23) to connect with the computer main unit system (30). When the user pats the head portion of the toy (60), the striking sensor unit (10) converts and transmits the striking signals to the computer main unit system (30) via the signal converting unit (20); the computer main unit system (30) operates and analyzes the force of the striking thereby commanding the reaction unit (40) to make the toy (60) sit, lie down, wiggle the tail or make sound.

## Claims

1. A striking reaction system mainly includes a striking sensor unit (10), a signal converting unit (20) connected to a computer main unit system (30) and a reaction unit (40) controlled by the computer main unit system (30); wherein the striking sensor unit (10) transmits a striking force to the signal converting unit (20) which converts the analog signal of vibration wave frequency to a digital signal and transmits it to the computer main unit system (30) for operation and analysis such that the reaction unit (40) makes an appropriate reaction thereby informing a user of the striking force or the interval time sequence.

2. The striking reaction system according to Claim 1, wherein the striking sensor unit (10) is disposed inside an electronic drum (50) and comprises a buzzing tab (11) or a reed and a set of signal wires (12) and when the electronic drum (50) is struck, the buzzing tab (11) vibrates and transmits the vibration to the signal converting unit (20) in the form of the analog signal via the signal wires (12).

3. The striking reaction system according to Claim 1, wherein the reaction unit (40) comprises an amplifier (41) and a displayer (42).

4. The striking reaction system according to Claim 1, wherein the signal converting unit (20) is built in the computer main unit system (30) or connected externally thereto.

5. The striking reaction system according to Claim 4, wherein dimensions of transmission interfaces at least include that of USB or IEEE1394 when the signal converting unit (20) externally connects with the computer main unit system (30).

6. The striking reaction system according to claim 1, wherein the striking sensor unit (10) is disposed inside a toy.

7. The striking reaction system according to claim 6, wherein the striking sensor unit (10) is disposed at the head portion of the toy; the signal converting unit (20) is disposed in the body thereof; the reaction unit (40) works as the mechanic joint at the leg portion or the tail portion thereof and when the user pats the head portion of the toy, the striking sensor unit (10) converts and transmits the striking signals to the computer main unit system (30) via the signal converting unit (20), whereby the computer main unit system (30) operates and analyzes the force of the striking thereby commanding the reaction unit (40) to cause the toy to make movement.

8. The striking reaction system according to claim 6, wherein the reaction unit (40) has an amplifier (41) disposed inside the toy.
